# FASCICULE DE BREVET EUROPEEN

(11) **EP 1 155 410 B1**
(45) Date de publication et mention de la délivrance du brevet: **01.12.2004**
(21) Numéro de dépôt: 00907734.8
(22) Date de dépôt: 25.02.2000
(51) Int. Cl.: G11B 20/00, G11B 23/28

(54) **DISQUE OPTIQUE SECURISE ET PROCEDE DE SECURISATION D'UN DISQUE OPTIQUE**
GESCHÜTZTE OPTISCHE PLATTE UND VERFAHREN ZUR SICHERUNG EINER OPTISCHEN PLATTE
SECURE OPTICAL DISK AND METHOD FOR SECUREMENT OF AN OPTICAL DISK

(30) Priorité: 26.02.1999 FR 9902474
(43) Date de publication de la demande: 21.11.2001
(73) Titulaire: Axalto S.A., 92120 Montrouge (FR); Fausse, Arnaud, 75009 Paris (FR)
(72) Inventeur: FAUSSE, Arnaud, F-75009 Paris (FR)
(74) Mandataire: Cassagne, Philippe M.J.
(86) Numéro de dépôt international: PCT/FR2000/000483
(87) Numéro de publication internationale: WO 2000/051119

(56) Documents cités:
- EP-A- 0 774 706
- EP-A- 0 809 245
- EP-A- 0 849 734
- DE-A- 4 242 247
- FR-A- 2 643 475

## Description

La présente invention concerne un disque optique de stockage de données. Elle concerne également un procédé de sécurisation d'un tel disque.

L'invention trouve une application particulièrement avantageuse dans des domaines tels que les domaines de l'informatique, des jeux, de l'audiovisuel.... Les médias de stockage de données, notamment les disques optiques, comprennent des données destinées à être exploitées généralement sur un terminal tel qu'un ordinateur ou un moniteur de télévision. Lesdites données sont des informations de type texte, des images, du son ou encore des logiciels.

De nombreuses copies frauduleuses des données contenues dans lesdits médias sont effectuées au moyen de logiciels accessibles à tous. Ces logiciels permettent de dupliquer des données d'un média en dépit des droits d'auteurs qui protègent généralement lesdites données. Un dispositif connu de l'état de l'art propose d'utiliser un boîtier de sécurité pour empêcher les copies pirates des données contenues dans un média. Le boîtier qui contient un circuit électronique d'identification est relié par exemple à un ordinateur dans lequel est introduit ledit média. Ledit dispositif divulgue la présence d'un programme dans le média permettant d'identifier le boîtier de sécurité par l'intermédiaire dudit circuit électronique. Le programme est chargé dans l'ordinateur puis il effectue l'identification. En cas d'absence du boîtier approprié, les données ne peuvent être lues, par suite, le média ne peut être utilisé. Le dispositif n'offre qu'une sécurité minimale dans la mesure où le programme de vérification peut être neutralisé sur l'ordinateur. Il n'existe alors plus aucune protection. De plus, généralement, un boîtier de sécurité est associé à un seul média. Par suite, la gestion de la sécurité devient très onéreuse et compliquée puisqu'il faut un nouveau boîtier de sécurité pour tout nouveau média.

Il est possible de protéger un disque optique au moyen d'un transpondeur. Un lecteur du disque est muni d'un interrogateur à radiofréquence. L'interrogateur émet un signal d'interrogation. En réponse à ce signal, le transpondeur émet un signal de réponse. Ce signal de réponse permet au lecteur d'accéder à un algorithme de décryptage. Le décryptage est effectué dans le lecteur. La demande de brevet européen publiée sous le numéro EP-0849734, qui décrit les caractéristiques au préambule de les revendications, semble décrire une telle protection de disque optique.

La demande de brevet allemande publiée sous le numéro DE-42 42 247 décrit une carte d'identification avec une puce et en dehors de cette puce une zone de stockage optique structurée sous forme d'une spirale.

La demande de brevet européenne publiée sous le numéro EP-0 774 706 décrit un procédé pour sécuriser des données stockées sur un support. Selon ce procédé les données sont comprimées et on y ajoute une identité et un compteur de signature provenant d'une puce à mémoire intelligente.

La demande de brevet française publiée sous le numéro FR-2 643 475 décrit un procédé de contrôle de l'utilisation d'un support d'informations sur un système de traitement d'informations pourvu d'un code identifiant prédéterminé. Le procédé comprend une étape d'association exclusive dudit support d'informations audit système de traitement d'informations de sorte qu'à l'issue cette étape, le support d'informations est utilisable uniquement sur ledit système de traitement d'informations.

La demande de brevet européenne publiée sous le numéro EP-0 809 245 décrit un procédé dans lequel un transpondeur du type « TIRIS » est attaché dans le centre d'un disque DVD. Le transpondeur transmet une adresse et un code à un interrogateur qui se trouve dans un lecteur de média. Le lecteur média ne joue que s'il y a une correspondance entre une donnée lue et le code reçu.

Aussi un problème technique à résoudre par l'objet de la présente invention est de proposer un disque optique sécurisé de stockage de données, ainsi qu'un procédé de sécurisation d'un tel disque, qui permettent d'éviter les copies frauduleuses des données contenues dans lesdits disques tout en n'alourdissant pas l'utilisation desdits disques.

Selon un premier aspect de la présente invention, un disque optique comprend les caractéristiques définies dans la revendication 1.

Selon un deuxième aspect de la présente invention, un procédé de sécurisation d'un disque optique comprend les caractéristiques définies dans la revendication 8.

Ainsi, comme on le verra en détail plus loin, le dispositif de l'invention permet de protéger des données du média en les cryptant et d'empêcher ainsi une lecture en clair des données. Une copie des données est inutilisable puisque lesdites données sont cryptées. Pour effectuer une lecture desdites données, ces dernières doivent être au préalable décryptées au moyen d'une clef secrète comprise dans ledit objet, lequel est intégré dans le média de stockage de données. La clef secrète est préférentiellement unique à un média. Ainsi, une lecture en clair de données est uniquement possible à partir dudit média.

La description qui va suivre au regard des dessins annexés, donnés à titre d'exemples non limitatifs, fera bien comprendre en quoi consiste l'invention et comment elle peut être réalisée.
La figure 1 est une vue de dessus d'un média de stockage conforme à l'invention.
La figure 2 est un schéma d'un objet portatif compris dans le média de la figure 1.
La figure 3 est une vue de côté d'un lecteur de média et du média de la figure 1.
La figure 4 est un schéma logique du lecteur de média de la figure 3.
La figure 5 est un autre schéma logique du lecteur de média de la figure 3.
La figure 6 est une vue partielle en perspective du lecteur de média de la figure 3.
La figure 7 est une vue de dessus d'une première réalisation du média de la figure 1.
La figure 8 est une vue de dessus d'une seconde réalisation du média de la figure 1.
La figure 9 est une vue de dessus partielle du lecteur de média de la figure 3.
La figure 10 est un schéma de données provenant du média de la figure 1.
La figure 11 est un autre schéma de données provenant du média de la figure 1.

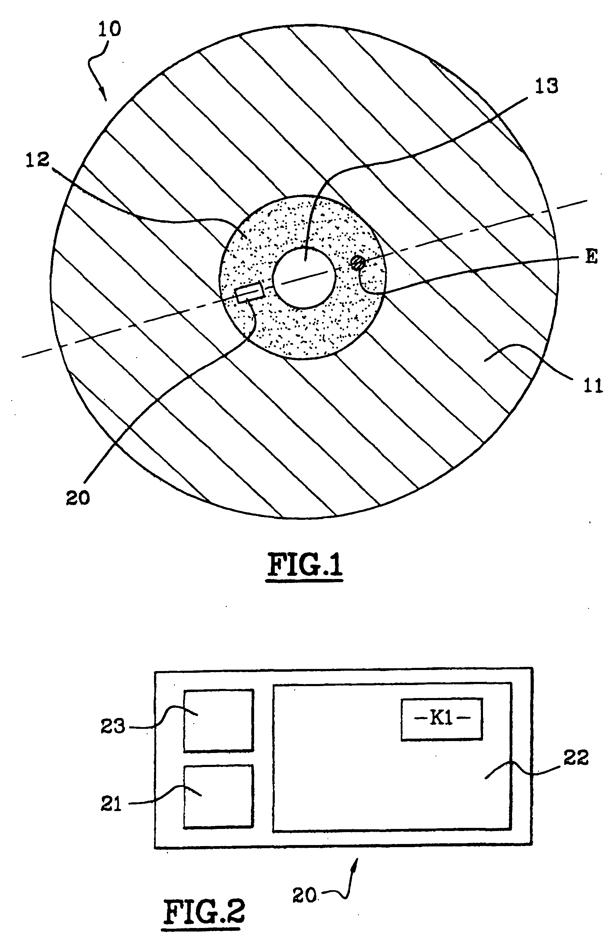

Sur la figure 1 est représenté un média 10 de stockage de données. Ledit média intègre un objet portatif 20 et des moyens d'échange de données. Le média 10 comporte trois zones principales. La zone périphérique 11 permet de stocker des données. Les deux autres zones sont des zones centrales. L'une est un trou 13 placé au centre du média et dans lequel un axe mécanique peut se glisser, ladite zone correspond ainsi à un axe de rotation. L'autre est une zone neutre 12 placée entre le trou 13 et la zone périphérique 11 et ne contenant aucune donnée. Ledit objet portatif 20 est intégré dans une zone centrale dudit média 10 qui est la zone neutre 12. Comme le montre la figure 2, l'objet portatif 20 comprend une mémoire 22 et un bloc de contacts 23 permettant d'établir des contacts électriques avec par exemple un terminal. La mémoire 22 comprend une clef K1 secrète. Cette clef est préférentiellement unique pour chaque média, c'est à dire qu'elle n'a pas de doublet, ni dans le média auquel elle appartient, ni dans d'autres médias. Ledit objet portatif 20 comprend un cryptoprocesseur 21. Ledit objet portatif est une puce à circuit intégré. Une puce est sécurisée.

Ledit média 10 est un disque optique. Un disque optique est un disque composé de pistes comportant des données. Lesdites données comprennent un logiciel d'application tels que par exemple un logiciel de jeu vidéo ou d'exploitation de bases de données.

La suite du présent exposé de l'invention a trait à l'exemple des CD-ROM. Néanmoins, il est bien entendu que l'invention s'applique de manière générale à tout autre disque optique.

Dans le cas d'un CD-ROM, les données d'une piste sont formatées suivant des standards tels que ceux appelés Livre Jaune et Livre Vert définis par Philips. Les standards définissent essentiellement deux modes de formatage de données. Suivant un premier mode appelé mode 1, la piste comporte des données utilisateurs, des données d'entête et des données de détection d'erreurs permettant d'avoir deux niveaux de détection d'erreurs. Suivant un deuxième mode appelé mode 2, la piste comporte des données utilisateurs, des données d'entête et des données de détection d'erreurs permettant d'avoir un seul niveau de détection d'erreurs. Les données d'entête comprennent un numéro de piste et des indicateurs de début et fin de piste. Les données utilisateurs comprennent le logiciel d'application.

Le média 10 connaît trois grandes phases. Une phase de fabrication, une phase dite de gravure-personnalisation et une phase d'utilisation.

Lors de la phase de fabrication, on place le média 10 sur une machine de fraisage qui réalise un logement dans lequel on intègre l'objet portatif 20. Ledit objet est inséré et collé dans le logement. Cependant, le poids dudit objet portatif peut déséquilibrer ledit média 10. Afin d'éviter ce problème, on prévoit que ledit média 10 comporte des moyens E d'équilibrage permettant d'équilibrer ledit média en le replaçant son centre de gravité sur son axe de rotation. Un mode de réalisation non limitatif desdits moyens d'équilibrage se fera au moyen d'une masselotte d'équilibrage composée d'une rondelle de métal collée dans un fraisage effectué dans ledit média, ladite masselotte étant diamétralement opposée audit objet portatif 20 du média 10, comme le montre la figure 1. La phase de fabrication est terminée.

Lors de la phase de gravure-personnalisation, des données sont cryptées et inscrites dans le média 10. Le cryptage et l'inscription, appelée aussi gravage, se font au moyen d'une machine de gravage. On prévoit que ladite machine de gravage est composée essentiellement des éléments suivants :
- une sonde munie de contacts permettant un échange de données entre un ordinateur pilotant ladite machine et l'objet portatif 20 intégré du média 10,
- un cryptoprocesseur représentant un algorithme de cryptage, permettant de crypter des données à graver,
- un logiciel générateur de clefs secrètes,
- un logiciel de chargement de clefs secrètes dans l'objet portatif 20 du média 10.

La phase de gravure-personnalisation se déroule selon les étapes suivantes :
- on charge un média 10 vierge,
- on génère un jeu individuel de clefs secrètes,
- on détermine les données à crypter,
- on crypte les données au moyen d'une clef K1 secrète unique,
- on inscrit lesdites données cryptées dans ledit média 10 ainsi que les données non cryptées,
- on charge le jeu individuel de clefs secrètes dans l'objet portatif 20 du média 10.

La clef K1 secrète unique provient du jeu individuel de clefs généré. Ladite clef K1 est soit l'une des clefs du jeu de clefs, soit une combinaison de clefs dudit jeu. Afin d'avoir une gestion optimisée des clefs et des médias associés, plusieurs clefs ou jeux de clefs peuvent provenir d'une même clef, par exemple, lorsqu'on diversifie des clefs à partir d'une clef appelée clef « maître ». De même, pour faciliter la gestion des médias, on pourra utiliser une même clef secrète pour une série de médias reconnaissables, par exemple, par un numéro de série.

On peut choisir de crypter toutes les données du média ou seulement une partie. Une piste comporte des blocs de données de deux mille quarante huit octets. Les données sont cryptées par groupe de huit octets si on utilise un algorithme de cryptage tel que le DES. D'autres algorithmes symétriques de cryptage peuvent être utilisés. L'ensemble des données est gravé dans la zone périphérique 11 du média. Le gravage se fait par des procédés connus tels que les procédés de type magnéto-optique ou brûlage de colorant par laser.

Désormais, le média 10 peut être utilisé.

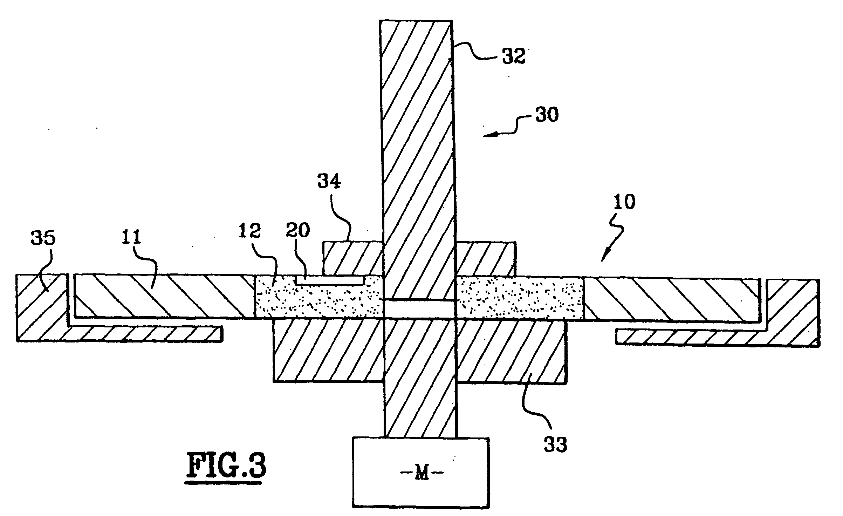

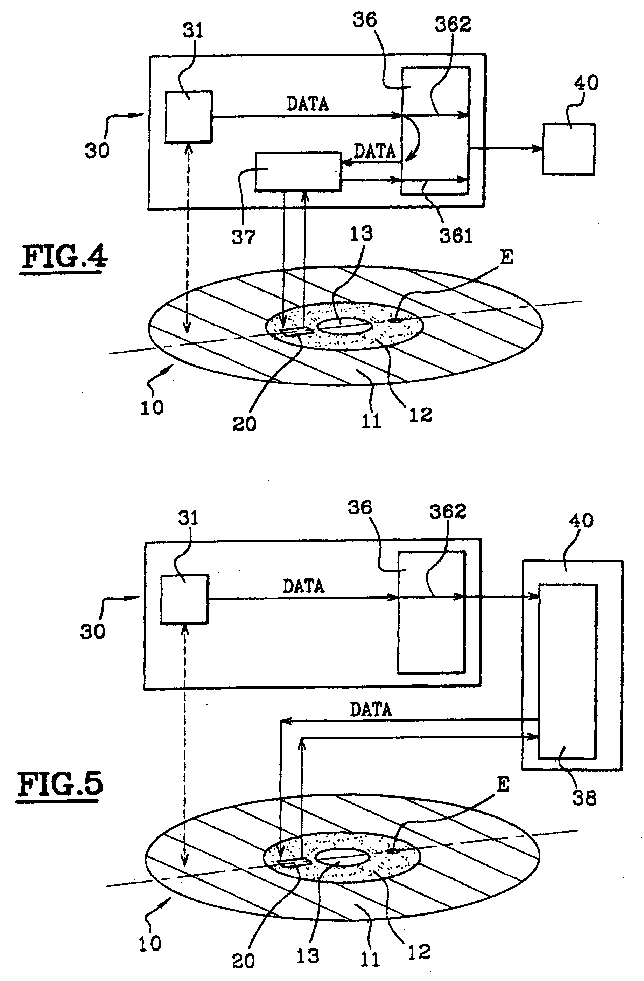

Lors de la phase d'utilisation, dans une première étape, on lit les données qui se trouvent dans le média 10. La lecture se fait au moyen d'un lecteur 30 de média. Comme le montrent les figures 3 et 4, le lecteur est composé essentiellement d'un plateau 35 dans lequel vient se loger le média 10, d'un moteur M permettant de faire tourner le média 10, d'un axe 32 mécanique qui vient se glisser dans le trou 13 du média 10, de deux plaques 33 et 34, permettant de maintenir le média 10 stable lorsque le lecteur fonctionne, d'une tête 31 de lecture laser comportant notamment une diode laser et des photodétecteurs, la diode laser permettant d'obtenir un faisceau laser, d'une interface 36 de type standard IDE ou SCSI permettant de connecter ledit lecteur 30 à un ordinateur 40, et, d'une interface 37 cryptoprocesseur permettant un dialogue avec le cryptoprocesseur 21 de l'objet portatif 20. La plaque 34 est appelée poupée et est solidaire de l'axe 32.

La lecture se fait de manière optique avec le faisceau laser et est définie dans des standards appelés tel que le Livre Bleu édité par Philips. Elle se fait suivant un procédé qui s'appuie sur la détection de la réflexion d'un faisceau laser sur une piste tantôt réfléchissante tantôt absorbante définissant ainsi des données se présentant sous forme de lumière. Le faisceau laser est par la suite dirigé vers les photodétecteurs qui sont des transducteurs permettant une conversion de la lumière en signaux électriques. Lesdits signaux électriques sont traités à un premier niveau afin d'éliminer des erreurs de discordance lors d'une lecture de données. La piste est par suite reconstituée, puis un code correcteur de deuxième niveau est appliqué lorsque celle-ci est formatée avec le mode 1. Par la suite, ladite piste est envoyée à l'interface 36 dudit lecteur 30 de média.

Le média 10 ainsi que le lecteur 30 de média ne comportent aucune indication permettant de dissocier les données cryptées des données non cryptées d'une piste. Ceci permet d'éviter une fraude qui consisterait à copier les indications portant sur un mode de cryptage des données contenues dans le média 10.

Dans une deuxième étape, le lecteur 30 de média reconnaît si le média 10 est équipé d'un cryptoprocesseur. A cette fin, il envoie la piste lue, via son interface 37 cryptoprocesseur, au média 10. Dans le cas où des données sont renvoyées par ledit média via un premier canal 361 de communication ouvert au préalable lors de la lecture dudit média 10, ledit canal étant compris dans l'interface 36, le lecteur 30 conclura à la présence d'un média 10 comportant un objet portatif 20 composé d'un cryptoprocesseur 21. Dans le cas contraire, aucune donnée n'est renvoyée, par conséquent, le média 10, ne contient aucun cryptoprocesseur et la lecture des données se fait sans décryptage.

Dans une troisième étape, dans le cas où le média 10 est équipé d'un cryptoprocesseur, comme le montre la figure 4, les données DATA lues sont envoyées à l'ordinateur 40 relié audit lecteur 30, via un deuxième canal 362 de communication ouvert au préalable lors de la lecture dudit média 10, ledit canal étant compris dans l'interface 36. Ces données sont appelées données brutes car elles ne subissent aucune modification. Dans le même temps, on envoie les données DATA lues au cryptoprocesseur 21. Selon un premier moyen de réalisation, on envoie lesdites données DATA, via l'interface 37 cryptoprocesseur. Ainsi, avant d'être envoyées au cryptoprocesseur, les données DATA sont modifiées au préalable en un format compréhensible par le cryptoprocesseur, par exemple en octets, grâce à l'interface cryptoprocesseur 37 comprise dans le lecteur de disque optique.

Selon un deuxième moyen de réalisation, comme le montre la figure 5, on envoie, au cryptoprocesseur 21 de l'objet portatif 20, lesdites données DATA au moyen d'un bus 38 de liaison série universelle appelée USB, ledit bus étant intégré dans l'ordinateur 40. Par suite, un unique canal de communication compris dans l'interface 36 du lecteur 30 est nécessaire. Les données décryptées dans ledit cryptoprocesseur 21 sont, par la suite, renvoyées à l'ordinateur 40 via ce même bus 38. Dans ce cas, c'est l'ordinateur 40 qui comporte une interface cryptoprocesseur qui modifie les données DATA en un format compréhensible par le cryptoprocesseur.

On notera que ce mode de réalisation est utilisable également lors de la deuxième étape décrite précédemment.

Lors de l'envoi des données DATA lues audit cryptoprocesseur, on transfère les signaux électriques correspondants auxdites données, du lecteur 30 de média au média 10, et, du média 10 à l'objet portatif 20, grâce aux moyens d'échange de données intégrés audit média et à des moyens d'échange intégrés au lecteur 30 de média.

Soit, les moyens d'échange de données intégrés audit média 10 sont avec contacts, soit, les moyens d'échange de données intégrés audit média 10 sont sans contacts.

Dans le cas de moyens d'échange de données sans contacts, selon un mode de réalisation non limitatif de l'invention, les moyens d'échange de données intégrés audit média 10 sont une antenne. Les moyens d'échange de données intégrés au lecteur 30 sont une seconde antenne. Dans ce cas, les données sont échangées par couplage inductif entre lesdites première et seconde antennes.

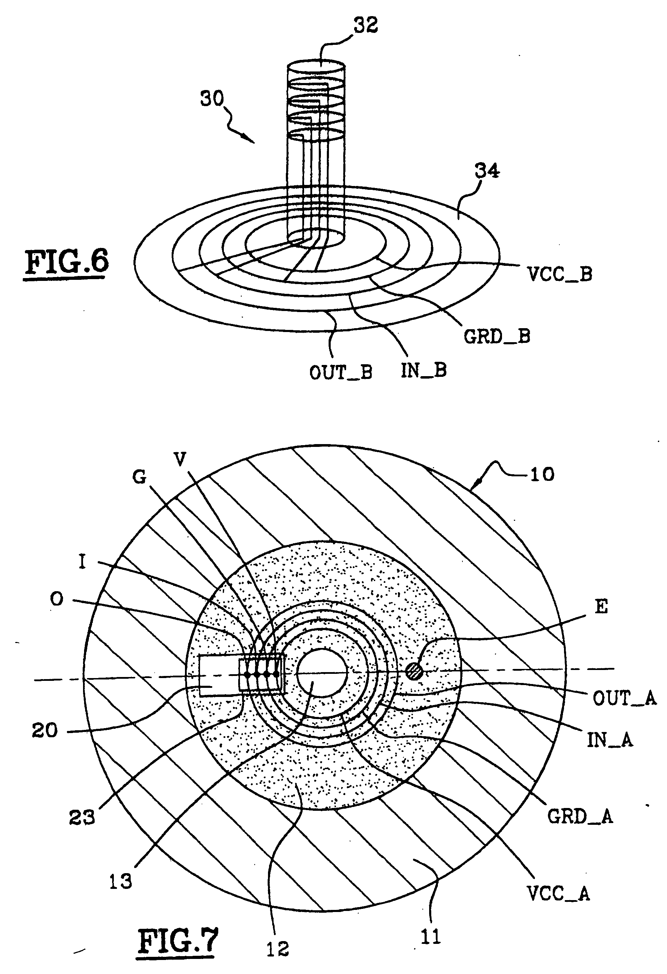

Dans le cas de moyens d'échange de données avec contacts, selon un premier mode de réalisation non limitatif de l'invention, comme le montre la figure 6, des premiers moyens IN_B, OUT_B, VCC_B et GRD_B d'échange sont intégrés au lecteur 30 de média au niveau de l'axe 32 et de la poupée 34, et, comme le montre la figure 7 et les moyens IN_A, OUT_A, VCC_A et GRD_A d'échange de données sont intégrés au média 10 au niveau d'une zone centrale qui est la zone neutre 12. Lorsque la poupée 34 est en contact avec le média 10, Les premiers moyens entrent en contact respectivement avec les deuxièmes moyens. Cela permet d'échanger des données entre ledit lecteur de média et ledit média. En outre, les deuxièmes moyens IN_A, OUT_A, VCC_A et GRD_A intégrés au média 10, sont reliés au bloc 23 de contacts de l'objet portatif 20 en des points de contact respectifs I, O, V et G. Lesdits deuxièmes moyens IN_A, OUT_A, VCC_A et GRD_A permettent également un échange de données entre ledit média 10 et ledit objet portatif 20. Ainsi, lesdits moyens d'échange de données, intégrés au média 10 et au lecteur 30, comprennent des moyens d'échange d'entrée IN_A, IN_B, des moyens d'échange de sortie OUT_A, OUT_B, des moyens VCC_A, VCC_B d'alimentation et des moyens GRD_A, GRD_B de mise à la masse.

Les moyens d'échange d'entrée IN_A et IN_B permettent de transporter des données du lecteur de média via le média 10. Le point de contact I et le moyen d'entrée IN_A permettent de transmettre les données du média 10 vers l'objet portatif 20. Les moyens d'échange de sortie OUT_A et OUT_B permettent de transporter des données du média 10 via le lecteur 30 de média. Le point de contact O et le moyen de sortie OUT_A permettent de transmettre les données de l'objet portatif 20 vers le média 10. Les moyens VCC_A et VCC_B d'alimentation permettent d'alimenter en tension ledit objet 20 portatif et les moyens GRD_A et GRD_B de mise à la masse permettent une mise à la masse dudit objet portatif.

Selon un second mode de réalisation, les moyens d'échange d'entrée IN_A, IN_B et de sortie OUT_A, OUT_B de données peuvent être confondus et être ainsi des moyens d'échange bidirectionnels.

On notera que selon un autre mode de réalisation, les premiers moyens IN_B, OUT_B, VCC_B et GRD_B d'échange de données intégrés au lecteur 30 de média peuvent être intégrés au niveau de la plaque inférieure 33 du lecteur.

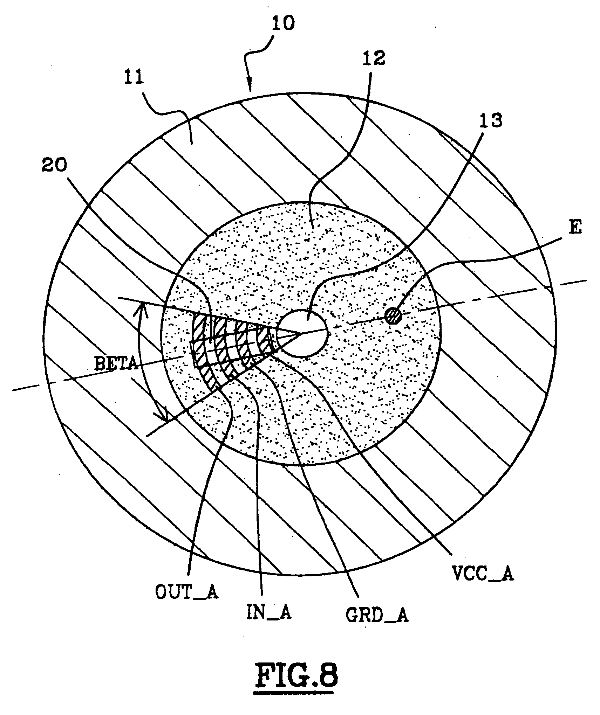

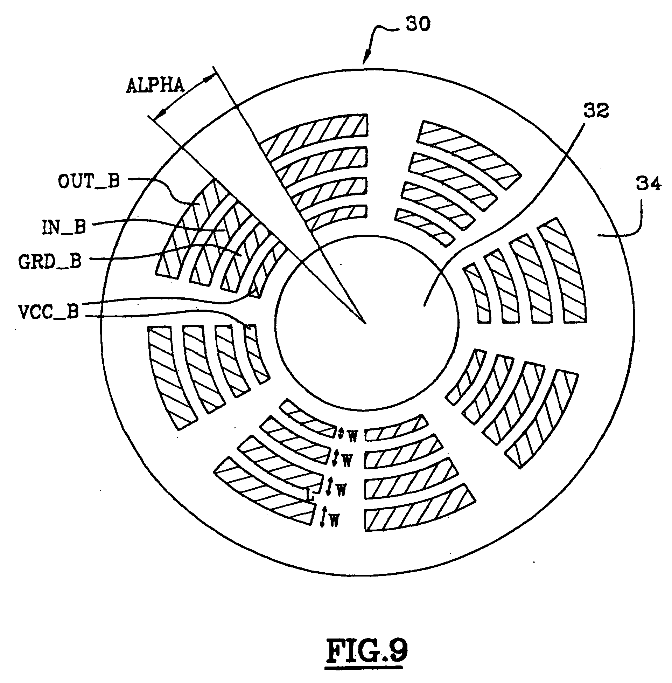

Pour permettre un transport efficace des signaux électriques, les moyens d'échanges de données précités intégrés audit média 10 sont composés d'un matériau permettant une bonne conductivité et évitant une trop grande oxydation desdits moyens. Ainsi, ils sont composés d'or. Lesdits moyens peuvent, par exemple, être des anneaux comme le montre la figure 7, des fils ou encore des arcs de cercles comme le montre la figure 8. Il en est de même avec les moyens d'échange de données intégrés au lecteur 30 de média. Préférentiellement, afin d'éviter la présence d'une boucle sensible au rayonnement électromagnétique et par suite d'éviter des parasites dus à ce rayonnement, les moyens d'échanges de données intégrés audit média 10 sont des arcs de cercle formant un secteur circulaire d'angle BETA et les moyens d'échange de données du lecteur 30 sont des arcs de cercle espacés d'un angle ALPHA inférieur à l'angle BETA, comme le montre la figure 9. Les arcs de cercles du média 10 et du lecteur 30 sont de même largeur W et sont distants d'une même largeur L. On garantit ainsi un contact permanent entre les différents moyens d'échange de données.

Après que les signaux électriques correspondants aux données DATA lues sont transmis à l'objet portatif 20 grâce aux moyens d'échanges de données définis précédemment, les données DATA sont décryptées au moyen d'un cryptoprocesseur qui les décrypte au moyen de la clef K1 secrète unique comprise dans la mémoire 22 de l'objet 20 portatif. Grâce à ce système de clef unique intégrée dans un objet portatif, une copie des données du média 10 sur un deuxième média, comportant ou non un cryptoprocesseur, est inutilisable.

Ledit cryptoprocesseur représente un algorithme inverse de celui qui a été utilisé pour crypter lesdites données. Ledit cryptoprocesseur est programmé ou câblé.

L'invention est avantageuse par rapport à une solution dans laquelle le cryptoprocesseur est un cryptoprocesseur rattaché au lecteur 30 de média. Il faudra alors envoyer la clef K1 secrète de l'objet portatif 20 dans le lecteur de façon temporaire, le temps de décrypter les données DATA lues. Il est clair que dans ce cas il n'est nul besoin d'envoyer les données DATA à l'objet portatif 20. Selon l'invention le cryptoprocesseur est intégré audit objet portatif 20. La clef secrète K1 ne sort pas de la puce : elle y demeure. Ceci est beaucoup plus sécuritaire étant donné que la clef K1 secrète demeure dans l'objet portatif 20, elle n'est jamais transmise à l'extérieur et n'est ainsi pas sujette à des fraudes qui consisterait à espionner le lecteur 30 de média pour reconstituer ladite clef K1 secrète. De plus, le fait que le cryptoprocesseur soit dans l'objet portatif empêche à un fraudeur de copier les moyens permettant de crypter ou décrypter.

Dans le cryptoprocesseur, les données DATA sont décryptées systématiquement, qu'elles soient à l'origine cryptées ou non, puis, le cas échéant, renvoyées audit lecteur 30, et enfin, transmises à l'ordinateur 40, via le premier canal 361 de communication si l'interface 37 cryptoprocesseur est utilisé.

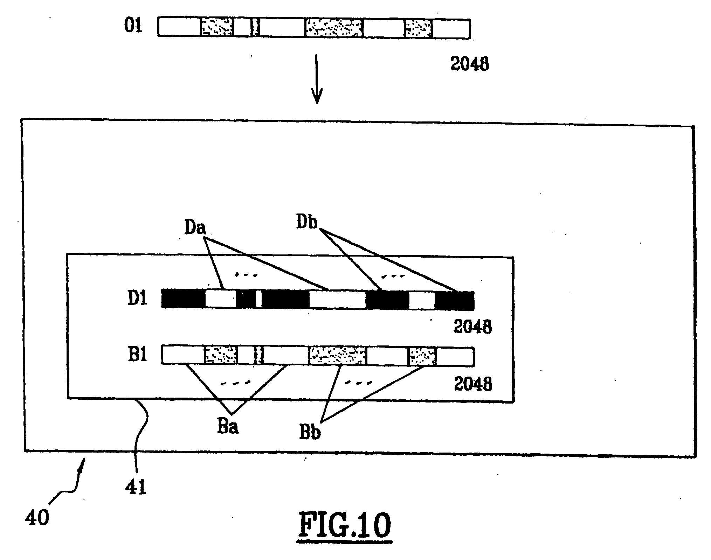

On charge, de manière alternative, dans une mémoire 41 de l'ordinateur 40, les données DATA dudit média 10, brutes et décryptées. L'ordinateur pourra ainsi repérer les différents ensembles de données envoyés. Comme le montre la figure 10, les données B dites brutes et décryptées D, sont envoyées à l'ordinateur 40, préférentiellement, par pistes ou blocs complets, ou octets. On notera que les données non cryptées à l'origine, mais décryptées via le cryptoprocesseur 21 ne sont pas utiles. Cependant, le fait que le lecteur 30 délivre systématiquement à l'ordinateur 40 les données brutes et décryptées permet de se prémunir d'une attaque qui consisterait, d'une part, à différencier les données cryptées et non cryptées, et, d'autre part, à trouver une manière de les utiliser, en se connectant tout simplement à la sortie du lecteur 30 de média.

Dans une quatrième étape, les données envoyées et chargées dans la mémoire 41 de l'ordinateur 40 sont utilisées de la manière suivante : lesdites données, qui comprennent le logiciel d'application du média 10, sont composées d'un couple de pistes ou blocs, une piste ou un bloc B1 dit brut et une piste ou un bloc D1 dit décrypté ayant pour même origine une piste ou un bloc O1 de données lues dans le média 10. La figure 10 montre un bloc B1 brut qui est composé, d'une part, de zones Ba de données non cryptées, appelées zones utiles, et, d'autre part, de zones Bb de données cryptées inutilisables. Le bloc D1 décrypté est composé de zones Db de données décryptées inutilisables et de zones Da, appelées également zones utiles, de données décryptées correspondant aux zones Bb de données cryptées du bloc B1 brut.

Le logiciel d'application comprend, d'une part, un programme d'autodémarrage reconnu par l'ordinateur, qui permet d'initialiser ledit logiciel, et, d'autre part, du code exécutable. Ledit code exécutable comprend un ensemble de liens permettant de relier différentes zones entre elles, de charger de nouvelles données en mémoire, de reconstituer une zone de données. Ledit programme d'autodémarrage est chargé initialement dans l'ordinateur 40.

Les zones utiles des différents blocs comportent généralement, d'une part, une partie du code exécutable, et, d'autre part, des données d'application utilisées par le logiciel d'application telles que par exemple des images, du texte, du son.

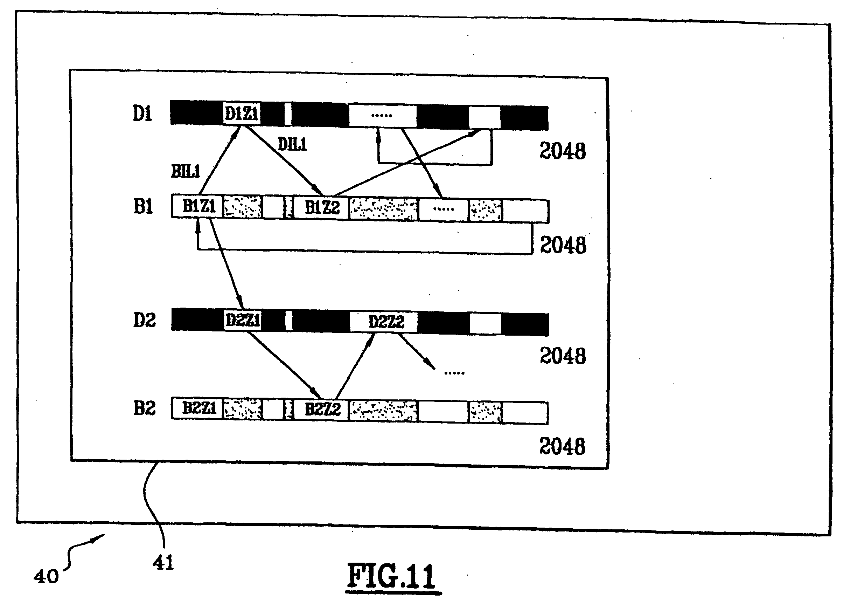

Comme le montre la figure 11, le bloc B1 brut comporte une première zone B1Z1 utile dont le code exécutable s'exécute et utilise les données d'application nécessaires à ladite exécution. A la fin de l'exécution dudit code, un premier lien B1L1 permet de se positionner sur une première zone D1Z1 utile du bloc D1 décrypté. Le code de ladite zone s'exécute. A la fin de l'exécution dudit code, un lien D1L1 de ladite zone D1Z1 permet de se positionner sur une deuxième zone B1Z2 utile du bloc B 1 brut dont le code s'exécute et ainsi de suite. Lorsque la dernière zone utile du bloc B 1 brut s'exécute, un lien permet de charger en mémoire 41 de l'ordinateur les blocs ou pistes de données dont le logiciel d'application a besoin. Ainsi un ou plusieurs autres couples de pistes ou de blocs, brut et décrypté, sont lus et chargés en mémoire 41. Ainsi, d'après ce qui précède, il sera très difficile pour un fraudeur de reconstituer le code exécutable.

On notera que, selon le disque optique 10 de l'invention, comprenant un cryptoprocesseur, décrit précédemment, le lecteur 30 pourra comprendre un service de décryptage. On enverra ainsi des données de l'ordinateur 40 vers le cryptoprocesseur 21 du média 10 afin qu'elles soient décryptées. Ce service sera utile pour certaines architectures de sécurité dans lesquelles le logiciel d'application aurait à décrypter des parties de pistes durant l'exécution dudit logiciel.

L'invention décrite ci-dessus présente d'autres avantages décrits ci-après. L'invention présente l'avantage de pouvoir, d'une part, sécuriser des applications écrites dans un langage de haut niveau, et d'autre part, de permettre une gestion de nombreuses applications. A cette fin, le disque optique 10 comporte des données DATA formant au moins une application écrite en langage de haut niveau, notamment en langage JAVA (marque déposée). Lesdites applications sont préférentiellement cryptées en totalité ou partiellement. Ainsi, lesdites applications sont sécurisées comme décrit précédemment et ne pourront pas être dupliquées. Par ailleurs, le disque optique étant d'une grande capacité mémoire, on pourra gérer un grand nombre d'applications. Ainsi il permettra à un fournisseur d'applications de faire la promotion de ses applications et de les distribuer en masse. Avantageusement, le disque optique est accessible en lecture-écriture pour un fournisseur d'applications. Par suite, le fournisseur pourra gérer lui-même les applications sur le disque optique à tout moment. Par exemple, à un point de vente, le fournisseur pourra télécharger des applications dans un disque à partir d'un de ses ordinateurs ou serveurs.

Le disque optique selon l'invention présente un intérêt particulier dans le domaine de la téléphonie mobile. Un mobile comporte une carte à puce de téléphonie appelée couramment carte SIM. Selon un état connu de la technique, lorsqu'un utilisateur du mobile veut utiliser un service d'un opérateur, soit l'application relative audit service se trouve sur son mobile, soit elle doit être téléchargée, dans la carte SIM, à partir d'un serveur de l'opérateur au travers d'un réseau géré par ledit opérateur. Souvent, l'opérateur propose de nouveaux services, par exemple un service de téléphonie bancaire, aux utilisateurs dont les applications doivent être téléchargées. Les applications sont généralement écrites en JAVA afin de pouvoir être modifiées et gérées par l'opérateur. Le téléchargement est long, peu fiable et le réseau est souvent encombré. De plus, la carte SIM a une mémoire réduite et ne peut supporter toutes les applications proposées par l'opérateur. Grâce au disque optique selon l'invention, un opérateur peut distribuer ses applications aux utilisateurs de manière sécurisée et évite l'encombrement de son réseau et une surcharge de la mémoire de la carte SIM. L'utilisateur achète un disque optique comportant les applications relatives aux services dont il a besoin. Il lui suffit par la suite d'insérer dans son ordinateur le disque optique et sa carte SIM dans un lecteur de carte connecté à son ordinateur et de choisir l'application qu'il souhaite charger dans sa carte. On pourra prévoir que le disque optique ne sera accessible qu'en lecture par l'utilisateur afin d'éviter qu'il ne modifie certaines données des applications.

## Revendications

1. Disque optique (10) agencé pour stocker des données encryptées (DATA) lesquelles sont décryptables au moyen d'un module de décryptage (20) comprenant une mémoire (22) contenant au moins une clef secrète (K1) et un cryptoprocesseur (21) pour décrypter les données encryptées (DATA) à partir de ladite clef secrète (K1) afin d'obtenir des données décryptées,
**caractérisé en ce que** le disque optique (10) comporte le module de décryptage (20) et des moyens d'échange de données (IN_A, OUT_A, VCC_A, GRD_A) permettant à un lecteur (30) de disque optique qui lit les données encryptées (DATA) dudit disque optique (10) d'appliquer les données encryptées au module de décryptage (20) faisant partie du disque optique (10) et permettant au lecteur (30) de disque optique de lire les données décryptées provenant du module de décryptage (20) faisant partie du disque optique (10).

2. Disque optique selon la revendication 1, **caractérisé en ce que** ledit module de décryptage (20) est une puce à circuit intégré.

3. Disque optique selon la revendication 1, **caractérisé en ce que** ledit module de décryptage (20) est intégré dans une zone centrale dudit disque (10).

4. Disque optique selon la revendication 1, **caractérisé en ce que** les moyens d'échange de données (IN_A, OUT_A, VCC_A, GRD_A) sont intégrés au disque (10) au niveau d'une zone centrale.

5. Disque optique selon la revendication 1, **caractérisé en ce qu'**il comporte des moyens (E) d'équilibrage permettant d'équilibrer ledit disque.

6. Disque optique selon la revendication 1, **caractérisé en ce que** les moyens d'échange de données sont munis de contacts.

7. Disque optique selon la revendication 1, **caractérisé en ce que** les moyens d'échange de données sont munis de moyens d'émission d'un champ énergétique.

8. Procédé de sécurisation d'un disque optique (10) de stockage de données, le procédé comprenant :
- une étape de cryptage dans lequel des données sont cryptées à partir d'au moins une clef secrète (K1) afin d'obtenir des données encryptées (DATA) ;
- une étape d'écriture dans laquelle les données encryptées (DATA) sont écrites dans ledit disque optique (10) ; et
- une étape de décryptage dans laquelle les données encryptées (DATA) dudit disque optique sont décryptées au moyen d'un module de décryptage (20) comprenant une mémoire (22) contenant la clef secrète (K1) et un cryptoprocesseur (21) pour décrypter les données encryptées (DATA) à partir de ladite clef secrète (K1) afin d'obtenir des données décryptées,
**caractérisé en ce que** l'étape de décryptage comprend :
- une étape d'échange de données entre, d'une part, un lecteur (30) de disque optique qui lit les données encryptées dudit disque optique (10) et, d'autre part, le disque optique (10) qui comporte le module de décryptage (20) et des moyens d'échange de données (IN_A, OUT_A, VCC_A, GRD_A), dans laquelle étape le lecteur (30) de disque optique applique les données encryptées au module de décryptage (20) via les moyens d'échange de données (IN_A, OUT_A, VCC_A, GRD_A) et dans laquelle étape le lecteur (30) de disque optique lit les données décryptées provenant du module de décryptage (20) via les moyens d'échange de données (IN_A, OUT_A, VCC_A, GRD_A).

9. Procédé selon la revendication 8, **caractérisé en ce qu'**il comporte une étape supplémentaire selon laquelle :
- on modifie préalablement à l'étape de décryptage, les données (DATA) en un format compréhensible par le cryptoprocesseur grâce à une interface cryptoprocesseur (37) comprise dans le lecteur (30) de disque optique.

10. Procédé selon la revendication 8, **caractérisé en ce qu'**il comporte une étape supplémentaire selon laquelle :
- on modifie préalablement à l'étape de décryptage, les données (DATA) en un format compréhensible par le cryptoprocesseur grâce à une interface cryptoprocesseur (37) comprise dans un ordinateur (40).

11. Procédé selon la revendication 8, **caractérisé en ce que**, dans l'étape de décryptage, les données (DATA) sont décryptées systématiquement, qu'elles soient à l'origine cryptées ou non.

12. Procédé selon la revendication 8, **caractérisé en ce qu'**il comporte une étape supplémentaire selon laquelle :
- on charge dans un ordinateur (40), un ensemble de données brutes (B) et un ensemble de données décryptées (D) ayant pour même origine un ensemble de données lues dans le disque (10).

13. Procédé selon la revendication 12, **caractérisé en ce que** le chargement se fait de manière alternatif.

14. Procédé selon la revendication 12, **caractérisé en ce qu'**un ensemble de données brutes (B) est composé d'au moins une zone de données cryptées inutilisables (Bb), et, un ensemble de données décryptées (D) est composé d'au moins une zone de données décryptées utiles (Da).

15. Procédé selon la revendication 12, **caractérisé en ce qu'**un ensemble de données brutes (B) est composé d'au moins une zone de données non cryptées utiles (Ba), et, un ensemble de données décryptées (D) est composé d'au moins une zone de données décryptées inutilisables (Dd).

16. Procédé selon les revendications 14 ou 15, **caractérisé en ce qu'**il comporte une étape supplémentaire selon laquelle :
- on exécute une partie de code exécutable compris dans une zone de données utiles comprenant des données d'applications.

17. Procédé selon la revendication 16, **caractérisé en ce qu'**il comporte une étape supplémentaire selon laquelle :
- on relie différentes zones de données entre elle, on charge de nouvelles données en mémoire, on reconstitue une zone de données au moyen d'un ensemble de liens compris dans le code exécutable.

18. Dispositif de lecteur de disque optique (30, 40) comprenant des moyens pour mettre en rotation un disque optique (10) et comprenant des moyens pour lire des données encryptées (DATA) stockées sur ledit disque (10) pendant que ledit disque (10) est en rotation, **caractérisé en ce que** le dispositif comprend des moyens d'échange de données (IN-B, OUT-B, VCC-B, GRD-B) pour appliquer les données encryptées (DATA) lues dudit disque (10) à un module de décryptage (20) faisant partie du disque optique (10) pendant que ledit disque (10) est en rotation et pour lire des données décryptées dudit module de décryptage (20) pendant que ledit disque (10) est en rotation.

## Patentansprüche

1. Zum Speichern von verschlüsselten Daten (DATA) angeordnete optische Speicherplatte (10), die mittels eines Entschlüsselungsmoduls (20) mit einem wenigstens einen geheimen Schlüssel (K1) und einen Kryptoprozessor (21) zum Entschlüsseln der verschlüsselten Daten (DATA) ab dem genannten geheimen Schlüssel (K1) zwecks Erhalts von entschlüsselten Daten beinhaltenden Speicher (22) entschlüsselbar sind,
**dadurch gekennzeichnet, dass** die genannte optische Speicherplatte (10) das Entschlüsselungsmodul (20) und einem Lesegerät (30) optischer Speicherplatten, das die verschlüsselten Daten (DATA) der genannten optischen Speicherplatte (10) liest, die Anwendung der verschlüsselten Daten auf das zur optischen Speicherplatte (10) gehörende und dem Lesegerät (30) optischer Speicherplatten das Lesen von aus dem zur optischen Speicherplatte (10) gehörende Entschlüsselungsmodul (20) stammende entschlüsselten Daten erlaubende Entschlüsselungsmodul (20) erlaubende Datenaustauschmittel (IN-A, OUT_A, VCC_A, GRD_A) umfasst.

2. Optische Speicherplatte gemäß Anspruch 1, **dadurch gekennzeichnet, dass** das genannte Entschlüsselungsmodul (20) ein Chip mit integriertem Schaltkreis ist.

3. Optische Speicherplatte gemäß Anspruch 1, **dadurch gekennzeichnet, dass** das genannte Entschlüsselungsmodul (20) in einen Bereich integriert ist.

4. Optische Speicherplatte gemäß Anspruch 1, **dadurch gekennzeichnet, dass** die Datenaustauschmittel (IN_A, OUT_A, VCC_A, GRD_A) bei einem zentralen Bereich in die Speicherplatte (10) integriert sind.

5. Optische Speicherplatte gemäß Anspruch 1, **dadurch gekennzeichnet, dass** sie das Auswuchten der genannten Speicherplatte zulassende Auswuchtmittel (E) umfasst.

6. Optische Speicherplatte gemäß Anspruch 1, **dadurch gekennzeichnet, dass** die Datenaustauschmittel mit Kontakten ausgestattet sind.

7. Optische Speicherplatte gemäß Anspruch 1, **dadurch gekennzeichnet, dass** die Datenaustauschmittel mit Ausgabemitteln eines Energiefeldes ausgestattet sind.

8. Sicherungsverfahren einer optischen Speicherplatte (10) zur Datenspeicherung, wo das Verfahren Folgendes umfasst:
- eine Verschlüsselungsstufe, in der die Daten ab wenigstens einem geheimen Schlüssel (K1) verschlüsselt werden, um verschlüsselte Daten (DATA) zu erhalten;
- eine Schreibstufe, in der die verschlüsselten Daten (DATA) in die genannte optische Speicherplatte (10) eingeschrieben werden; und
- eine Entschlüsselungsstufe, in der die verschlüsselten Daten (DATA) der genannten optischen Speicherplatte mittels eines Entschlüsselungsmoduls (20) mit einem den geheimen Schlüssel (K1) enthaltenden Speicher (22) und einem Kryptoprozessor (21) zum Entschlüsseln der verschlüsselten Daten (DATA) ab dem genannten geheimen Schlüssel (K1) entschlüsselt werden, um entschlüsselte Daten zu erhalten,
**dadurch gekennzeichnet, dass** die Entschlüsselungsstufe Folgendes umfasst:
- eine Datenaustauschstufe zwischen einerseits einem Lesegerät (30) optischer Speicherplatten, das die verschlüsselten Daten der genannten optischen Speicherplatte (10) liest, und andererseits die optische Speicherplatte (10), die das Entschlüsselungsmodul (20) und Datenaustauschmittel (IN_A, OUT-A, VCC_A, GRD_A) umfasst, wobei in der Stufe das Lesegerät (30) optischer Speicherplatten die verschlüsselten Daten über die Datenaustauschmittel (IN_A, OUT_A, VCC_A, GRD_A) auf das Entschlüsselungsmodul (20) anwendet und in der das Lesegerät (30) optischer Speicherplatten die über die Datenaustauschmittel (IN-A, OUT-A, VCC_A, GRD_A) aus dem Entschlüsselungsmodul (20) stammenden entschlüsselten Daten liest.

9. Verfahren gemäß Anspruch 8, **dadurch gekennzeichnet, dass** es eine zusätzliche Stufe umfasst, nach der:
- man vor der Entschlüsselungsstufe die Daten (DATA) mittels einer im Lesegerät (30) optischer Speicherplatten inbegriffenen Kryptoprozessorschnittstelle (37) in ein für den Kryptoprozessor verständliches Format abändert.

10. Verfahren gemäß Anspruch 8, **dadurch gekennzeichnet, dass** es eine zusätzliche Stufe umfasst, nach der:
- man vor der Entschlüsselungsstufe die Daten (DATA) mittels einer in einem Computer (40) inbegriffener Kryptoprozessorschnittstelle (37) in ein für den Kryptoprozessor verständliches Format abändert.

11. Verfahren gemäß Anspruch 8, **dadurch gekennzeichnet, dass** die Daten (DATA) in der Entschlüsselungsstufe systematisch entschlüsselt werden, ganz gleich, ob sie ursprünglich verschlüsselt waren oder nicht.

12. Verfahren gemäß Anspruch 8, **dadurch gekennzeichnet, dass** es eine zusätzliche Stufe umfasst, nach der:
- man in einen Computer (40) einen Satz Rohdaten (B) und einen Satz verschlüsselter Daten (D) lädt, deren gemeinsamer Ursprung ein in der Speicherplatte (10) gelesener Datensatz ist.

13. Verfahren gemäß Anspruch 12, **dadurch gekennzeichnet, dass** das Laden alternativ erfolgt.

14. Verfahren gemäß Anspruch 12, **dadurch gekennzeichnet, dass** ein Satz Rohdaten (B) aus wenigstens einem Bereich nicht verwertbarer verschlüsselter Daten (Bb) gebildet wird und ein Satz entschlüsselter Daten (D) aus wenigstens einem Bereich verwertbarer entschlüsselter Daten (Da) gebildet wird.

15. Verfahren gemäß Anspruch 12, **dadurch gekennzeichnet, dass** ein Satz Rohdaten (B) aus wenigstens einem Bereich verwertbarer nicht verschlüsselter Daten (Ba) gebildet wird und ein Satz entschlüsselter Daten (D) aus wenigstens einem Bereich nicht verwertbarer entschlüsselter Daten (Dd) gebildet wird.

16. Verfahren gemäß Anspruch 14 oder 15, **dadurch gekennzeichnet, dass** es eine zusätzliche Stufe umfasst, nach der:
- man einen Teil des in einem Bereich verwertbarer Daten mit Anwendungsdaten inbegriffenen ausführbaren Codes ausführt.

17. Verfahren gemäß Anspruch 16, **dadurch gekennzeichnet, dass** es eine zusätzliche Stufe umfasst, nach der:
- man unterschiedliche Datenbereiche untereinander verbindet, man neue Daten in den Speicher lädt, man einen Datenbereich mittels eines im ausführbaren Code inbegriffenen Verbindungssatzes wiederherstellt.

18. Lesevorrichtung optischer Speicherplatten (30, 40) mit Mitteln, um eine optische Speicherplatte (10) in Rotation zu bringen, und mit Mitteln, um auf der genannten Speicherplatte (10) gespeicherte verschlüsselte Daten (DATA) zu lesen, während die genannte Speicherplatte (10) sich in Rotation befindet, **dadurch gekennzeichnet, dass** die Vorrichtung Datenaustauschmittel (IN-B, OUT-B, VCC-B, GRD-B) zur Anwendung der gelesenen verschlüsselten Daten (DATA) der genannten Speicherplatte (10) auf ein zur optischen Speicherplatte (10) gehörenden Entschlüsselungsmodul (20) umfasst, während die genannte Speicherplatte (10) sich in Rotation befindet, und zum Lesen von entschlüsselten Daten des genannten Entschlüsselungsmoduls (20), während sich die genannte Speicherplatte (10) in Rotation befindet.

## Claims

1. An optical disk (10) arranged to store encrypted data (DATA) (DATA) which are decryptable by means of a decryption module (20) that includes amemory (22) containing at least one secret key (K1) and a cryptoprocessor (21) to decrypt the encrypted data (DATA) (DATA) from said secret key (K1) in order to obtain decrypted data,
**characterized in that** the optical disk (10) includes the decryption module (20) and the means to exchange data (IN_A, OUT_A, VCC_A and GRD_A) allowing the optical disk reader (30), which reads the encrypted data (DATA) from said optical disk (10), to apply the encrypted data (DATA) (DATA) to the decryption module (20) BEINF part of the optical disk (10), and allowing the optical disk reader (30) to read the decrypted data coming from the decryption module (20) being part of the optical disk (10).

2. An optical disk according to claim 1, **characterized in that** said decryption module (20) is an integrated-circuit chip.

3. An optical disk according to claim 1, **characterized in that** said decryption module (20) is incorporated into a central zone of said disk (10).

4. An optical disk according to claim 1, **characterized in that** the means for exchanging data (IN_A, OUT_A, VCC_A and GRD_A) are incorporated into a central zone of the disk (10).

5. An optical disk according to claim 1, **characterized in that** it includes balancing means (E) used to balance said disk.

6. An optical disk according to claim 1, **characterized in that** the means for exchanging data are equipped with contacts.

7. An optical disk according to claim 1, **characterized in that** the means for exchanging data are equipped with means for the emission of an energy field.

8. A method for affording security to an optical disk (10) for the storage of data, said method including:
- an encryption step in which data are encrypted using at least one secret key (K1) in order to obtain encrypted data (DATA) (DATA);
- a write step in which the encrypted data (DATA) (DATA) are written onto said optical disk (10);
- and
- a decryption step in which the encrypted data (DATA) (DATA) of said optical disk are decrypted by means of a decryption module (20) that includes a memory (22) containing the secret key (K1) and a cryptoprocessor (21) used to decrypt the encrypted data (DATA) using said secret key (K1) in order to obtain decrypted data,
**characterized in that** the decryption step includes:
- a step for the exchange of data between, firstly, an optical disk reader (30) which reads the encrypted data (DATA) from said optical disk (10) and, secondly, the optical disk (10) which includes the decryption module (20) and the means for exchanging data (IN_A, OUT_A, VCC_A, and GRD_A), during which step the optical disk reader (30) applies the encrypted data (DATA) to the decryption module (20) via the means for exchanging data (IN_A, OUT_ A, VCC_A, and GRD_A) and in which step the optical disk reader (30) reads the decrypted data coming from the decryption step (20) via the means for exchanging data (IN_A, OUT_A, VCC_A and GRD_A).

9. A process according to claim 8, **characterized in that** it includes an additional step in which:
- prior to the decryption step, the data are modified into a format that is comprehensible to the cryptoprocessor with the aid of a cryptoprocessor interface (37) included in the optical disk reader (30).

10. A method according to claim 8. **characterized in that** it includes an additional step in which:
- prior to the decryption step, the data are modified into a format that is comprehensible to the cryptoprocessor with the aid of a cryptoprocessor interface (37) included in a computer (30).

11. A method according to claim 8, **characterized in that**, in the decryption step, the data are decrypted in every case, whether they were encrypted originally or not.

12. A method according to claim 8, **characterized in that** it includes an additional step in which:
- a set of raw data (B) and a set of decrypted data (D) both with the same set of data read from the hard disk (10) as their origin, are loaded into a computer (40).

13. A method according to claim 12, **characterized in that** said loading process is carried out alternately.

14. A method according to claim 12, **characterized in that** a set of raw data (B) is composed of at least one unusable encrypted data (DATA) zone (Bb), and a set of decrypted data (D) is composed of at least one useful decrypted data zone (Da).

15. A method according to claim 12, **characterized in that** a set of raw data (B) is composed of at least one useful unencrypted data (DATA) zone (Ba), and, a set of decrypted data (D) is composed of at least one unusable decrypted data zone (Dd).

16. A method according to claims 14 or 15, **characterized in that** it includes an additional step in which:
- part of the executable code contained in a useful data zone that includes useful data, including application data, is executed.

17. A method according to claim 16, **characterized in that** it includes an additional step in which:
- different data zones are linked together, new data are loaded into memory, and a data zone is reconstituted by means of a set of links included in the executable code.

18. A device for reading an optical disk (30, 40) including the means to spin an optical disk (10) and including the means to read encrypted data (DATA) stored on said disk (10) while said disk (10) is in rotation, **characterized in that** the device includes the means to exchange data (IN_B. OUT_B, VCC_B, GRD_B), to apply the encrypted data (DATA) read from said disk (10) to a decryption module (20) being part of the optical disk (10) while said disk (10) is in rotation, and to read decrypted data from said decryption module (20) while said disk (10) is in rotation.
